# EUROPEAN PATENT APPLICATION

(11) **EP 0 683 403 A2**
(43) Date of publication of application: **22.11.1995**
(21) Application number: 95107611.6
(22) Date of filing: 18.05.1995
(51) Int. Cl.: G02B 5/128, E01F 9/04, E01F 9/08

(54) **Retroreflective articles containing low levels of pigments**

(30) Priority: 20.05.1994 US 246678
(71) Applicant: MINNESOTA MINING AND MANUFACTURING COMPANY, St. Paul, Minnesota 55133-3427 (US)
(72) Inventor: Hachey, Kathleen A, c/o Minnesota Mining and, Saint Paul, Minnesota 55133-3427 (US); Hedblom, Thomas P., c/o Minnesota Mining and, Saint Paul, Minnesota 55133-3427 (US)
(74) Representative: VOSSIUS & PARTNER

(57) **Abstract**

A retroreflective article (21) and a method for making that article are taught. The retroreflective article comprises transparent retroreflective microspheres (22) and a low level of reflective pigment dispersed in a binder layer (23). Optionally, colored retroreflective articles can be made with the addition of coloring agents to the binder layer.

## Description

The present invention relates to retroreflective articles or coatings containing low levels of reflective pigments, and a method for making such retroreflective articles and coatings. In particular the invention relates to a retroreflective article such as a patterned pavement marking. Colored retroreflective articles can be made with the optional addition of coloring agents to the binder layer.

Pavement markings, such as those delineating the centerline and edgeline of the roadway are important in order to provide visual guidance for motor vehicle drivers. In some situations, colorful markings, especially yellow, but other colors as well, can be very helpful. An ongoing challenge to the industry is to provide pavement markings of increasing brightness, particularly at nighttime when visibility is limited. This challenge is especially great when colorful markings are considered.

Currently, pavement markings typically rely on an optical system comprising transparent microspheres partially embedded in a binder layer containing diffuse reflective pigment particles as reflectors. Traditionally, the diffuse pigments utilized have been pigments such as titanium dioxide (TiO₂) and lead chromate (PbCrO₄). TiO₂ pigment is traditionally used to impart a white color to pavement markings, while PbCrO₄ is commonly used to impart a yellow color to pavement markings. Occasionally, colored pavement markings will be made by using tinted microspheres in combination with a resin vehicle containing a light scattering pigment such as titanium dioxide, or by using ordinary colored paints to paint a line and dropping clear glass beads onto the painted line. Also, colored pavement markings may be made by using resins or paints containing colored pigments in high amounts in conjunction with TiO₂ for scattering.

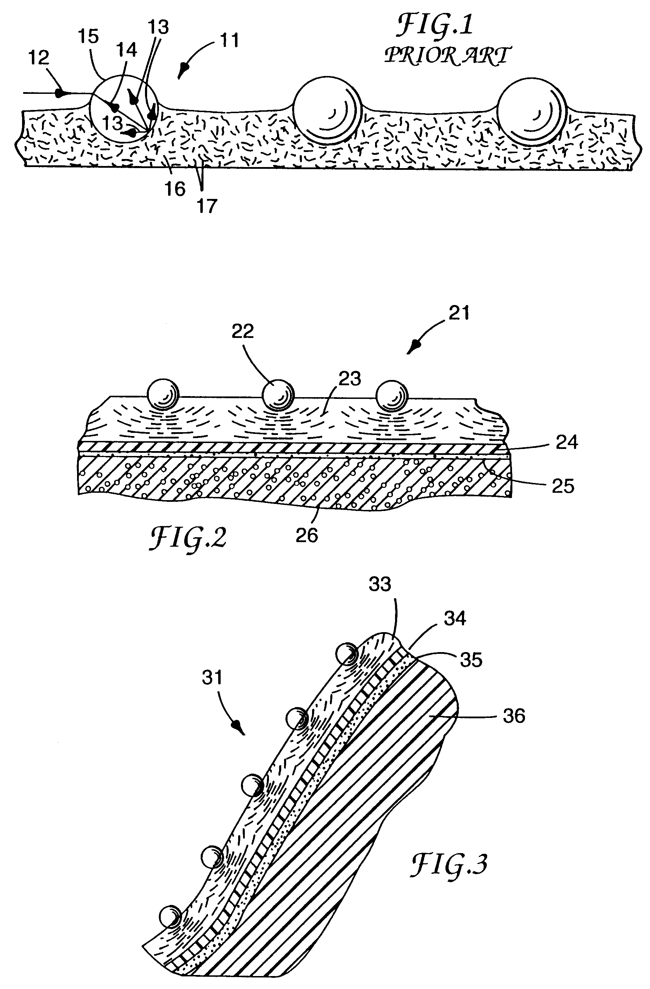

As illustrated in Figure 1 depicting a diagram of a conventional diffusely reflecting retroreflective construction 11, in use, light 12 from the headlamp of a vehicle enters the microsphere 15 and is refracted so as to fall on a diffusely reflective light scattering pigment 17 dispersed in light-transmissive medium 16. Some portion 14 of the light is returned along the original entrance path in the direction of the vehicle so as to be visible to the driver. (see Fig. 1) The efficiency of this type of an optical system however is relatively low, as the diffusive type reflective surfaces tend to scatter the incident light in many directions 18 without selective return in the direction of incidence and high loadings of the diffusely reflecting pigments are necessary to impart useful levels of reflectivity to the system.

It is known that retroreflective sheetings incorporating glass microspheres with hemispheric specularly reflective coatings can provide much higher brightness than similar sheetings employing diffuse pigments. See U.S. Patent No. 3,005,382 (Weber) and U.S. Patent No. 3,190,178 (McKenzie). However, this process is rather extensive, as it involves coating the microsphere with a layer of metal, partially embedding the microsphere into a binder layer, and then etching the exposed surface of the microspheres to remove the metal. Also, retroreflective sheetings made by this process are prone to a dull or gray daytime color, due to the presence of the metal.

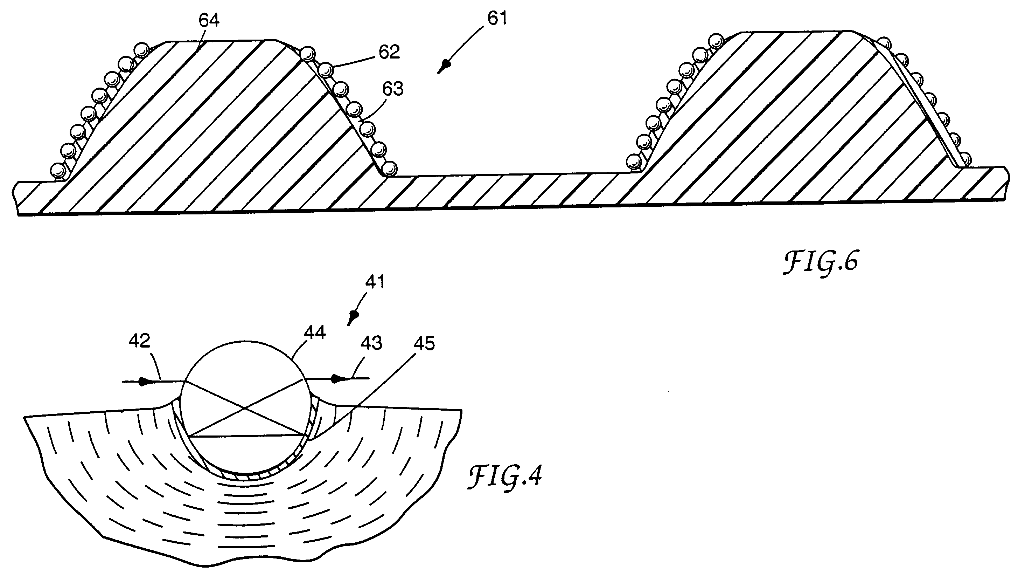

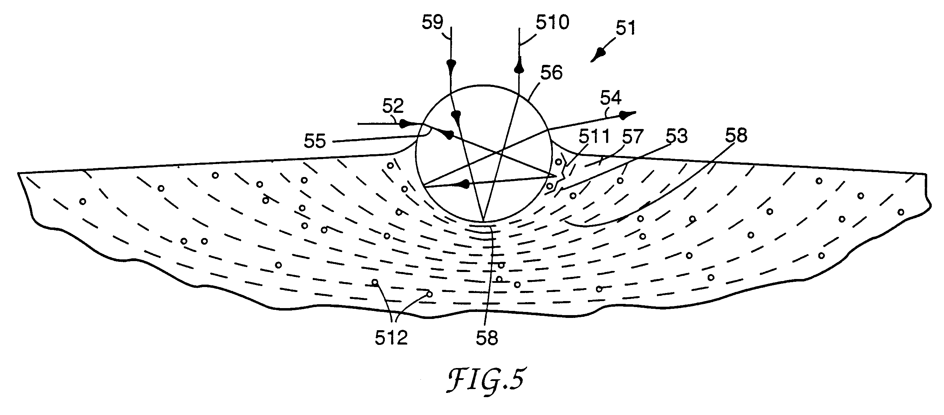

Retroreflective fabrics which utilize glass microspheres in a binder which may contain specularly reflecting aluminum flakes are known. See for example, U.S. Patent No. 4,103,060 (Bingham), U.S. Patent No. 2,567,233 (Palmquist), and U.S. Patent No. 3,758,192 (Bingham). Also as disclosed in U.S. Patent No. 3,758,192, the retroreflective structure may have a color layer provided over the binder layer, or as a part of the binder layer. All of the above-mentioned systems preferentially specify microspheres of refractive index of approximately 1.9, which because their focal point lies at the surface of the microsphere are especially bright in retroreflection with specularly reflective pigments. See Figure 5, light rays 59 and 510.

Attaining adequate brightness is an ongoing problem for pavement markings, particularly for colored pavement markings. The selection of a color immediately limits the amount of light useful in retroreflection by limiting the portion of the spectrum available as returned light. It is difficult to achieve both good daytime color and nighttime color, as color that may be adequate during the day may appear dim or pastel when viewed in nighttime retroreflected light. When an object is viewed in the direct daylight the object's overall color is seen, whereas at night only retroreflected color is seen. Likewise, in order to attain an adequate nighttime brightness, it may be necessary to add so much diffuse reflective pigment such as titanium dioxide that both the daytime and nighttime colors appear washed-out or pastel.

What is needed is a retroreflective article or coating that improves brightness and "trueness" of color under both daytime and nighttime viewing conditions. Surprisingly, such an article is achieved through the use of pearlescent pigments or aluminum pigments (at much lower pigment loadings than have been considered ideal in other reflective products) and semi-transparent organic pigments together with microspheres of approximately 1.75 index of refraction. Microspheres of 1.75 index have previously been considered to be a mismatch with pigments such as the pearlescents mentioned here because of these pigments' specular or nearly specular properties in retroreflection. In addition to the surprisingly adequate levels of retroreflectivity achieved in these constructions, another benefit is that the extraordinarily low pigment loadings which provide the most ideal combination of retroreflective brightness and color intensity are also very cost effective. Conventional theory holds that maximum brightness is attained by heavy loadings of pigments in combination with microspheres of 1.9 index of refraction.

This invention demonstrates a practical method of achieving retroreflective brightness higher than that of most roadway striping while providing well saturated, clearly recognizable colors with pigment loadings far lower than those typically used in conventional road markings.

The present invention provides a pavement marking with improved retroreflectivity compared to markings employing conventional pigmentation systems and improved color, for example, red or yellow, under both daytime and nighttime viewing conditions.

In brief summary, the present invention provides a retroreflective article comprising a plurality of microspheres partially embedded in and protruding from the outer surface of a binder layer. The binder layer comprises particles of reflective pigment flakes in a light-transmissive medium. These reflective pigment flakes are selected from the group consisting of aluminum pigment flakes and pearlescent pigment flakes. Use of the term reflective pigment throughout this patent will refer to either aluminum pigments or pearlescent pigments. Additionally, the binder layer may also comprise coloring agents if desired. The coloring agents include for example substances such as colored pigments and dyes.

It is particularly surprising that the technology would work in a reflective article employing the 1.75 refractive index microspheres because pigments with specular character are normally thought to be most effective in combination with microspheres of refractive index of 1.9 or greater. Additionally, it is very surprising that reflectivities in a useful range of brightness can be achieved with such extraordinarily low loadings of reflective pigments compared with other articles previously described in patents and literature.

The reflective pigments of the binder layer provide for useful levels of retroreflection through improved optical efficiency. The reflective pigments tend to align themselves parallel with the web onto which they are coated, so that when the microsphere is dropped onto the web it indents the specular pigments such that the reflective pigment flakes effectively form a "coating". This "coating" of reflective pigments, with their reflectors aligned, is optically very efficient, and provides for high levels of brightness.

Because the reflective flakes are used at a much lower concentration in this invention than in others employing 1.9 and greater index microspheres, the 1.75 index microsphere provides an ideal reflective element which can be more effectively used to impart color to the retroreflected light.

Incorporation of the coloring agents of this invention into the binder layer more efficiently results in a pavement marking with "true" color than a pavement marking comprised of painted lines and microspheres. This invention relies for color on the coloring agents rather than on the reflective pigments as would a system employing 1.9 index microspheres. Additionally, this approach allows for easier application to a patterned surface, in contrast to prior art using similar materials but more complicated constructions with multiple layers such as those taught by Bingham for use in fabric transfers. For instance, a liquid employing such a reflective system could successfully be applied directly to a surface such as a wall, poster, curb, or roadway.

The primary use of this invention is as a pavement marking tape, more specifically a patterned pavement marking tape. The invention has improved reflectivity at entrance angles common to roadway delineation than comparable constructions not employing reflective pigment flakes.

The invention will be further explained with reference to the drawings, wherein:
Figure 1 is a schematic diagram of a conventional diffusely reflecting retroreflective element.
Figure 2 is a cross-sectional view of the retroreflective article of the invention, in a horizontal configuration.
Figure 3 is a detailed cross-sectional view of a retroreflective article of the invention demonstrating the vertical component due to the invention's placement on a structured surface such as the embossed protrusion of a patterned pavement marking.
Figure 4 is a schematic diagram of a conventional specularly reflecting retroreflective element in a horizontal configuration.
Figure 5 is a schematic diagram of a retroreflective element of the invention.
Figure 6 is a cross-sectional view of a pavement marking embodiment of the invention, displaying the vertical component due to the protrusions of the patterned pavement marking.

These figures, which are idealized and not to scale, are intended to be merely illustrative and non-limiting.

Figure 2 depicts an illustrative embodiment of the invention 21, wherein binder layer 23 is coated onto film 24. Microspheres 22 are embedded into the binder layer. An adhesive layer 25 may optionally be applied to the other side of the film, enabling the film to be adhered to a structured surface 26. Any suitable film or conformance layer and any suitable adhesive may be used. This flat sheet embodiment of the invention may be applied to a contoured or structured surface in order to provide a vertical component. Alternatively, the binder layer could be coated directly onto a structured surface and microspheres applied to the coating for reflectivity at the site of its use.

The binder layer into which the microspheres are partially embedded comprises reflective pigment flakes in a light-transmissive medium. The binder layer is formed by mixing the reflective pigment flakes into the light-transmissive medium, and then coating this mixture onto a film, carrier, or surface of some type. If a colored pavement marking other than white is desired, the coloring agent may be added directly to the medium as well. The binder layer may be coated in any suitable manner, i.e., out of solvent or from a 100 percent solids mixture. The thickness of the binder layer when dried should be greater than about 35 micrometers (µm). The minimum thickness depends on the average diameter of the microspheres used, as the microspheres are optimally embedded to a depth of approximately 50 to 60 percent of their average diameter, although a depth of approximately 45 to 65 percent of their average diameter is typically effective. The binder layer may be coated onto any suitable film, carrier, or surface. The film may be left attached to the coating to become a permanent part of the article if desired or the coating may be removed and placed onto another structure. A preferred surface to coat the binder onto is the protrusions of a patterned pavement marking.

The reflective pigment flakes of the invention are generally thin, plate-like particles, which are relatively large in comparison to the diffusely reflective pigments commonly used in pavement markings. The key property of these pigments is that their length and width is much greater than their thickness. Other specular flakes possessing this property may also be useful. Due to this property of being much greater in length than in thickness, these flakes tend to align themselves parallel to the web or surface onto which they have been coated from the shear of the coating process. This property is known as "leafing". The viscosity of the material chosen for the medium in which to disperse the pigment is such that the medium will flow so as to not interfere with the aligning or bending of the pigment flakes. When the microsphere is dropped onto and indents the coating medium, the material at the bottom of the microsphere has the most compression and tends to pull the pigment flakes down with it the most closely. The effect is that the flakes tend to line up around the embedded portion of the microsphere like a coating. This tendency of the flakes to effectively coat the microsphere results in higher levels of reflectivity, as the reflectivity will have a larger specular component than if this coating did not take place.

The reflective pigment flakes of the invention have a large specular reflectance component, so that light hitting the pigment particle tends to be reflected off the specular surface at a mirror image from normal of the angle at which it struck the specular surface. These reflective pigment flakes have an average maximum dimension falling in the range of about 4 to 36 micrometers and an average thickness in the range of 2 to 5 micrometers, the binder containing less than 15 percent by weight based on total binder solids. More preferably, the weight percent of reflective pigment will be in the range of 5 to 10 percent. If the concentration of reflective pigment is too low, the leafing ability of the pigment may be interfered with, and the brightness decreased. In colored embodiments, the intensity of the reflected color is reduced as the concentration of the reflective pigment is increased, as the increase in the reflective pigment increases the whiteness of the reflected light from the system. Both types of reflective pigments, the aluminum flakes and the pearlescent flakes, are each available in various colors.

Pearlescent pigment flakes are especially preferred as the reflective pigment. Among the reasons for their preference include their tendency to effectively coat the microsphere through an improved cupping action, and their absence of gray color common with metallic pigments. An example of a preferred pearlescent pigment is a typical mica-based pearlescent pigment also containing titanium dioxide and color pigments additives available from the Mearl Corporation of New York, New York.

The reflective pigment is dispersed into a suitable binder. The important properties for this binder include light-transmissivity, durability for intended use, ability to be easily coated, ability to keep the pigment particles suspended, and adequate wetting and bead adhesion. It is important that the coating medium be light-transmissive so that light entering the retroreflective article is not absorbed by the medium but is instead retroreflected. For ease of coating, the medium will preferably be a liquid with a viscosity of less than 10,000 centipoise at room temperature. Vinyls, acrylics, epoxies, and urethanes are examples of suitable mediums. Urethanes are a preferred medium. Any suitable mixing technique that avoids high shear that would deleteriously change the particles shape may be used to disperse the pigment in the medium. The dispersion is then coated onto a film, carrier, or surface. After coating, pearlescent pigments and aluminum pigments in the designated size range and in the designated concentration tend to orient themselves with their flat surfaces in approximately tangential relationship. Preferably, these reflective pigments will bend through their broadest dimension to conform to the contour of the microsphere in a cup-like fashion, thereby providing good retroreflective efficiency.

Various coloring agents may optionally be added if a colored pavement marking is desired. Preferred coloring agents are organic, semi-transparent pigments. Other suitable materials may also be used. This property of semi-transparency of the coloring agent is important so that light will pass through the coloring agent particles prior to and/or after being retroreflected by the reflective pigment flake, thereby imparting the coloring agent's color to the retroreflected light.

The preferred colored organic pigments are usually in the size range of 0.03 to 0.11 micrometers in length and somewhat rod-like in shape. Their relatively small size contributes to their semi-transparency, although the pigments used in the invention are inherently somewhat transparent due to their organic nature. Their fine size relative to the reflective pigment flakes enables a fraction of the coloring agent particles to reside between the microsphere and the reflective pigment flakes. This is important so that the light can pass through the coloring agent particles before and/or after being reflected by the pearlescent pigment, thereby imparting some of its color to the reflected light. It is necessary to have some type of reflector pigment such as aluminum flakes or pearlescent flakes in order to have the nighttime reflectance. If the traditional titanium dioxide is used in sufficient quantities for good nighttime brightness, the resulting daytime color will tend to look too pastel or washed-out. The coloring agents in combination with the reflector pigments of the invention in the appropriate amounts will provide true daytime color as well as bright nighttime color. The coloring agents are present in approximately 1 to 7 percent loading by weight based on weight of total binder solids.

The transparent microspheres of the invention may range from approximately 70 to 400 micrometers in diameter, although larger microspheres will also work. Preferably, the microspheres range in diameter from 200-250 micrometers. The microspheres of the invention can be of any material suitable to adequately refract light. Preferably, the microspheres are ceramic for durability. The microspheres preferably have an index of refraction greater than 1.7 and less than 1.9. More preferably the index of refraction of the microspheres is 1.75 to 1.81. It is important that the microspheres be of appropriate index of refraction to refract the incident light ray in such a manner as to maximize the retroreflectivity and the color of the system. U.S. Pat. No. 4,564,556 (Lange) teaches the making of ceramic microspheres.

Figure 5 is a schematic diagram of a retroreflective element of the invention 51, shown here in a horizontal configuration. It is believed that the pearlescent pigment flakes 58 in binder 57 are closer to the microsphere 56 at the bottom of the microsphere due to the rheology of the binder and the manner in which the microsphere sinks into the binder with the reflective pigment flakes aligned. The pigment platelets tend to line up from the shear stresses of the coating process. Then, as the microspheres are applied, the material at the bottom of the microsphere has the most compressive force on it, and drags pigment flakes down with it, so the flakes remain closest to the microsphere at this point. Since the concentration of the reflective pigments in this invention is relatively low, this cupping action of the pigment flakes may not be as close to the microsphere as it would be if the concentration were higher. Another possibility is that, again due to the relatively low concentration, the cupping action may not be as perfect. That is, the cupping may still be close to the microsphere, but because of the low concentration of pigment flakes and the impact this has on the way the flakes are compressed into this cup-like formation, the flakes are not oriented as precisely. Light 59 entering the microsphere at near normal will be refracted to a point near the bottom of the microsphere and will be specularly reflected back as light ray 510 demonstrates. However, this type of reflection occurs only when the microsphere and light source are oriented, such as with vertical signs or patterned pavement markings. The typical entrance angles for pavement markings are much higher, as shown by incident light ray 52. With the higher entrance angles, the light will focus near the midpoint of the microsphere, nearer the point at which the binder contact with the microsphere ends. It is believed also that nearer the midpoint of the microsphere, nearer the point at which the binder contact with the microsphere ends, that the pearlescent pigment flakes are further away from the microsphere, again due to the rheology of the binder and the manner in which the microsphere sinks into the binder with the reflective pigment flakes aligned. It is believed in this critical region 511 where most of the higher entrance angle incident light will focus to, that the specular pearlescent pigment flake is acting more like a diffuse reflector, returning a disproportionately high amount of light 55 back along the path at which it entered. If the pearlescent pigment flakes were up close to the microsphere like a coating in this region 511, and were therefore acting like true specular reflectors, high angle incident light 52 would be specularly reflected 54. The light would be reflected in a direction useless to a driver. (see Figure 4 for more detail on the mechanism of specular reflection)
Figure 5 also demonstrates the proposed mechanism of light reflectance for the retroreflective element of the invention containing coloring agent particles 512 in the binder 57. It is believed that, with the 1.75 index microspheres of the invention, incident light 52 is focusing a short distance behind the microsphere 56 due to the refractive index of the microsphere, so that light passes through the colored pigment particles prior to and/or after contacting the specularly reflecting reflective pigment flakes 58 and 53 before being retroreflected 55. The coloring agent particles 512 are scattered randomly throughout the binder layer, including between the microsphere and the reflective pigment flakes. Since the light passes through the coloring agent particle before and/or after being retroreflected by the reflective pigment particle some of the color of the coloring agent particle is imparted to the retroreflected light. Basically, the effect of the low levels of the reflective pigments is similar to that of a crude space coat. For example, U.S. Pat. No. 2,407,680 (Palmquist, et al.) teaches the use of a high index microsphere with a separate spacing layer between the microspheres and the reflective layer. Because of the low level of reflective pigments in the article of the invention, the effect is that of having a space coat but without having to go through the additional step of applying a separate space coat.

While the theory set out for the mechanics of the optics of the invention is believed to be correct, we don't wish to be bound by this theory.

Retroreflective articles of the invention may be prepared in the following manner. The binder dispersion is prepared by mixing reflective pigment flakes into a light-transmissive medium, for example with an air mixer, taking care not to expose the flakes to high shear so as to maintain their integrity. This dispersion is then coated onto a film, carrier, or surface of some type. Coating or application is by any suitable means, for example notched bar coating, wire coating, squeeze-roll coating, spraying, co-extrusion or other means. Squeeze roll coating is a preferred method, as taught in U.S. Pat. No. 4,988,541 (Hedblom). This method also allows the binder material to be selectively placed on the vertical surfaces of the patterned surface. The film can ultimately be left attached to the binder and microspheres to become a permanent part of the retroreflective article if desired.

The microspheres are delivered onto the binder layer while it is still fluid so as to allow the microspheres to sink into the coating and become partially embedded to a preferred depth of approximately 50 to 60 percent of their average diameter. This preferred depth of embedment is important for both efficient optics (especially in flat pavement tape constructions with high entrance angles) and adequate anchoring. If the microsphere is not embedded far enough, the refracted light will fall on a portion of the microsphere not in contact with binder and so will not be reflected. The microspheres may be delivered by any suitable method, for example from a hopper or a fluidized bed. The delivery system is usually equipped with a metering blade to control the number of microspheres applied. If the binder is coated from solvent, some of the solvent may be evaporated prior to placement of the microspheres in order to improve control of the depth of embedment. Alternatively, excess solvent could be evaporated after microsphere deposition. The depth of embedment, or sink, of the microsphere is controlled through a combination of the relationship between surface energy of the microspheres and surface tension of the coating, and the viscosity of the fluid coating. If the surface energy of the microsphere is appropriately matched to the surface tension of the fluid coating, the microsphere will tend to float and not sink into the coating. The surface energy of the microsphere may be altered by various surface treatments, such as the use of surfactants. The viscosity of the coating may be controlled, for example through heating, solvent content, addition of thickeners, selection of composition, or addition of fillers. Thixotropic agents or other thickening agents may be added to the binder in amounts that will not substantially decrease brightness.

By controlling the surface energy of the microspheres and the rheology of the coating, the manner in which the binder material draws up around the microspheres is controlled. Capillation is the term used to describe the slight wicking action of the binder material around the microsphere. This capillation is important because the binder material forms a socket-like structure around the microsphere and holds it in place. With the wicking action taken into account, the microspheres are embedded on average to a depth of approximately 50 to 60 percent of their average diameter. The critical parameter is the depth of embedment; whether the depth is obtained through the sink of the microsphere or through capillation is less important. As the binder material hardens as by cooling, loss of solvent or other volatiles, or by chemical reaction such as cross-linking or polymerization, the microspheres are held in place.

Capillation is also important for optical efficiency, as it is an efficient means to achieve microsphere embedment, by bringing more of the microsphere into contact with the coating, allowing for a more efficient use of the reflective optics. The same effect could be obtained without capillation by having the binder layer be straight across between microspheres, however this would require more binder layer material. The key point is that the contact angle between the binder layer and the microsphere not be greater than 90°, as less of the microsphere will then be in contact with the binder layer, decreasing the optical efficiency. Care must be taken so there is not an excessive amount of wicking, as the microsphere will then be on a pedestal and will be more likely to break free of the binder material. The amount of capillation will depend on the medium chosen for the binder layer.

Microsphere 44 with a specular reflecting surface behaves in the manner demonstrated in Figure 4. 41 depicts a specularly reflecting retroreflective element. The light 42 enters the microsphere 44. The light is refracted below to focus at the specularly reflective coating 45 on the microsphere. The light is reflected at a mirror image from normal of the angle at which it entered. For the high entrance angles common to flat pavement markings, a totally specularly reflecting surface will reflect light 43 at such an angle that very little, if any, of the incident light will be returned to a driver. While the retroreflective elements of this invention behave as a specular reflector near the bottom of the microsphere when light enters near normal, the retroreflective elements behave more like a diffuse reflector near the median of the microsphere where the binder contact with the microsphere ends, returning a disproportionate amount of light along the path at which it entered. It is for this reason that it is important that the microsphere be embedded to a depth of about 50 to 60 percent.

Figure 3 is a cross-section of an embodiment of the invention 31, wherein the binder layer 33 is coated onto a film 34 with an adhesive layer 35 which is applied to a raised portion 36 of a patterned pavement marking. The microspheres 32 are embedded into the binder layer.

In a particularly preferred embodiment of the invention, the microspheres are ceramic with a refractive index of 1.75, and the binder is an urethane containing both pearlescent pigment flakes and semi-transparent organic color pigment particles. The binder is directly coated onto a structured surface with protrusions, and the microspheres then applied to the binder. An example of such a structured surface is the rubber matrix of a pavement marking with protrusions molded into it (Fig. 6). Figure 6 is a cross-section of a retroreflective article 61 with microspheres 62 partially embedded in a binder layer 63 on the embossed protrusions 64 of a patterned pavement marking. Another example of such a structured surface is a curb. The binder is coated directly onto the curb, and the microspheres applied to the binder coating.

In another preferred embodiment, the binder layer is applied to a flat tape which is then applied to a 2-d or 3-d object such as a barrel or post.

It is preferable to have at least a slight vertical component to the retroreflective article made from the retroreflective elements of the invention. This is so that the specular reflective pigments will come into utilization.

### Examples

The invention will be further explained by the following illustrative examples which are intended to be non-limiting. Unless otherwise indicated, all amounts are expressed in parts by weight.

### Example 1

2.3 grams of Mearlin Bright Orange pearlescent pigment flakes and 1.4 grams of a semi-transparent organic color pigment dispersed in an Epoxy Base by Harwick Chemical Co. were air-mixed into 70 grams of an approximately 52% solids urethane. This dispersion was notch-bar coated onto an embossed pliant polymer at a wet coating thickness of approximately 300 micrometers. Ceramic microspheres of 1.75 index of refraction with an average diameter of 215 micrometers were dropped onto the binder layer while it was still fluid. The microspheres were applied at a density of approximately 0.0125 grams per square centimeter. The viscosity of the binder layer was controlled through the application of heat so that the microspheres became embedded to a depth of approximately 50 to 60 percent of their average diameter upon complete drying of the binder layer.

### Example 2

The construction of Example 1 except the dispersion was coated onto a release liner, which acted as a disposable carrier. After the microspheres were dropped onto the binder and the binder completely dried to form a sheet, the carrier was discarded.

### Example 3

The construction of Example 1 with the addition of a layer of a pressure-sensitive adhesive to the other side of the embossed pliant polymer.

### Example 4

The construction of Example 3 where the embossed pliant polymer with adhesive was then adhered to a roadway to form a pavement marking.

### Example 5

The construction of Example 2 with the substitution of a pliant layer of primed aluminum foil instead of the disposable carrier, and the addition of an adhesive layer coated onto the backside of the foil.

### Example 6

The binder layer of Example 1 was applied directly to a curb and microspheres then dropped onto the coating.

Various modifications and alterations of this invention will become apparent to those skilled in the art without departing from the scope and spirit of this invention.

## Claims

1. A retroreflective article comprising a plurality of microspheres partially embedded in and protruding from the outer surface of a binder layer, wherein said binder layer comprises particles of reflective pigment flakes in a light-transmissive medium, characterized in that said pigment flakes comprise less than fifteen percent by weight of the total solids in the binder layer.

2. The article of claim 1 further characterized in at least one of the following:
a) said reflective pigment flakes are selected from the group consisting of aluminum pigment flakes and pearlescent pigment flakes; or
b) said reflective pigment flakes comprise between 1 and 10 percent by weight of the total weight of solids in the binder; or
c) said reflective pigment flakes comprise between 3 and 7 percent by weight of the total of solids in the binder layer; or
d) said reflective pigment flakes are on the order of 4 to 36 micrometers in length; or
e) said reflective pigment flakes tend to orient themselves with their flat surfaces in approximately tangential relationship with the microsphere near the bottom of the microsphere, bending through their broadest dimension to conform to the contour of the microsphere; or
f) said reflective pigment flakes, while bending through their broadest dimension to conform to the contour of the microsphere, are a greater distance from the microsphere near the midpoint of the microsphere where the contact with the binder ends than at the bottom of the microsphere.

3. The article of claim 1 or 2, further characterized in that said article is a pavement marking.

4. The article of any of claims 1 to 3 further characterized in at least one of the following:
a) said microspheres are ceramic or glass; or
b) said microspheres are of a refractive index between about 1.5 and about 1.8; or
c) said microspheres are of a refractive index between about 1.7 and about 1.8; or
d) said microspheres are of a refractive index of about 1.75; or
e) said microspheres are embedded in said binder layer to a depth of approximately 45 to 65 percent of their average diameter.
f) said microspheres are embedded in said binder layer to a depth of approximately 50 to 60 percent of their average diameter.

5. The article of any of claims 1 to 4 wherein said medium is an urethane.

6. The article of any of claims 1 to 5 further characterized in that said binder layer additionally comprises a coloring agent.

7. The article of claim 6 further characterized in at least one of the following:
a) said coloring agent is organic; or
b) said coloring agent is semi-transparent; or
c) said coloring agent is dispersed throughout said binder layer, so that a portion of said coloring agent is located between the reflective pigment flakes and the microspheres; or
d) said coloring agent particles are on average on the order of 0.03 to 0.11 micrometers or less in length.

8. The article of any of claims 1 to 7 where in its intended position for use, said article is affixed to a road to act as a pavement marking.

9. The article of any of claims 1 to 8 where in its intended orientation for use, said article is oriented vertically.

10. A method of making a retroreflective article characterized in that said method comprises the steps of:
1) providing a fluid coating comprising reflective pigment flakes in a binder, wherein said pigment flakes comprise less than fifteen percent by weight of the total solids in the binder layer;
2) depositing microspheres onto the fluid coating and allowing the microspheres to become partially embedded in the fluid coating; and
3) solidifying said fluid coating.

11. A method according to claim 10 further characterized in that said binder further comprises particles of semi-transparent organic pigment.

12. A method according to claim 10 or 11 further characterized in that it comprises the additional step of applying said coating to one side of a film.

13. A method according to claim 12 further characterized in that it comprises the additional step of applying an adhesive to the second side of the film.

14. A method according to claim 13 further characterized in that it comprises the additional step of applying the adhesive side of the film to a substrate having a structured surface to form a pavement marking.

15. A method of making a retroreflective article characterized in that said method comprises the steps of:
1) providing a fluid coating comprising reflective pigment flakes, and particles of semi-transparent organic pigment in a binder, wherein said pigment flakes comprise less than fifteen percent by weight of the total solids in the binder layer;
2) depositing said fluid coating to selected portions of a structured base material;
3) depositing microspheres onto the fluid coating and allowing the microspheres to become partially embedded in the fluid coating; and
4) solidifying said fluid coating.
